# EUROPEAN PATENT APPLICATION

(11) **EP 1 575 242 A1**
(43) Date of publication of application: **14.09.2005**
(21) Application number: 04005974.3
(22) Date of filing: 12.03.2004
(51) Int. Cl.: H04L 29/08

(54) **Exact geographical information for an internet web server through internet dialing over a telecommunications network**

(71) Applicant: SIEMENS AKTIENGESELLSCHAFT, 80333 München (DE)
(72) Inventor: Schöpf, Johannes, 82256 Fürstenfeldbruck (DE)

(57) **Abstract**

A method and apparatus for accurately determining a geographical location of a user of a telecommunications network is provided. A switch controls communications of the IP network. A remote access gateway couples the IP network to the TDM network. A location function provides the geographical location of the user.

## Description

### BACKGROUND

For many internet applications and services, for example, search engines, research, advertising and marketing, it is immensely important to determine the geographical location of the internet user. With the geographical information the web server through the web application can for example select the correct language which is presented to the user on the web site. With the correct geographical location, the web server can eliminate advertising and marketing that do not make sense for the users, such as advertisements for automobile services in foreign countries listed on the users web site. With the correct geographical information, the web site can direct and adapt commercial offers for selected users, such as branch services registered in the remote location. The web server would also be able to use so called push services to send targets and appropriate advertising to users, such as regional administration information. Geographical location information would also be useful for blocking internet attacks through so called denial of service (DoS).

In many other instances the convenience and user friendliness of web sites can be improved. More than this, the users should not be required to provide the selection criteria for these improvements. Naturally, it would be advisable to combine geographical information with other data to further improve usability.

Geographical information would also be useful in mobile telecommunication networks, with which the effective area of the radio sell can be evaluated and tracked. That is, geographical location of a user in a mobile telecommunications network would be helpful in determining the extension and breadth of the cell phone network cell.

Of course, geographical location has other applications than here mentioned. The object of this invention is applicable in comparable services on the internet.

### OBJECTIVES OF THE INVENTION

Thus, an objective of the present invention is to provide geographical location information to arbitrary web applications.

Another object of the present invention is to provide the geographical location information based in a telecommunications network for internet access by the arbitrary web applications.

Another object of the present invention is to guarantee the granularity and exactness of the geographical location information.

Still another objective of the present invention is to reduce the complexity and the effort required to obtain the geographical location information.

Another objective of the invention is that the internet service provider (ISP) can offer the above mentioned services themselves to the content providers.

Another objective of the invention is that the ISP can offer the above mentioned services themselves to the users.

It should be pointed out that the invention is particularly applicable for large Internet Service Providers (ISP) that provide such services as web search engines, as relatively fewer relations between the content delivery services and the ISP's are necessary. Of course, it goes without saying that the present invention is applicable to all sizes of ISP's and web search machines.

A number of firms deal with this problem on the basis of the given criteria and parameters of the IP address to conclude the geographical location information. Still another method is to set up regional databanks worldwide that the web server can access, whereby the geographical location of the user can be ascertained from the local database. These solutions unfortunately are insufficient to determine the exact geographical location of the user because, for one thing, the IP address in practice is only a very rough approximation of the country, region and detailed location of the user. Another reason is that the router topology is often indicated by the IP address, not the geographic topology.

A further hindrance is that the tunneling process, for example between the dial in point and the access router of the ISP for remote access server does not provide any reference between the dial in point of the user and the first internet router and its IP address. The internet addresses of the user are dynamically given and, in most of the cases, out of the address pool, which should be on line with the routing schemes of the first internet router. Furthermore, through the process of the telephone network as an internet access, there is no reference between the location of the user, the dialing point (RAS Server) and the first internet router (Edge Router) and its IP address. In addition, a provision for the IP addresses according to the entering point and geographical localization must be carried out. The here-to-fore processes suffer also under constant database changes due to reconfiguration by the ISPs.

### SUMMARY OF THE INVENTION

The present invention is a withdrawal from the external database solution that is made available to the web servers. The geographical information will be realized by the remote access servers (RAS) in working together with the authentication, authorization and accounting server (AAA) and is realized by the ISP. To ascertain the geographical localization information, the internet user would be made available by an ISP databank or configuration data. It is also possible to provide the geographical localization information from of a E.164 directory. The present invention, therefore, elevates the granularity of the geographical information and suitable improvements therefore are here proposed.

In one aspect of the invention, the remote access server infrastructure is bundled with the ISP as an integrated service. With the present invention, there is no more reliance on an external data base delivery. It shall be appreciated that the exactness and sufficiency of the granularity or the geographical information is provided accurately. It will also be appreciated that a separate databank is not necessary with the present invention. Because the present solution is independent, and therefore scalable, said problems are avoided. It will also be appreciated that, with the present invention, the same functions are applicable to both narrow band and broad band dialing. These and other advantages will become apparent with a better appreciation for the invention as set forth in the following description.

The following figures provide at least one example of the embodiment of the invention which will be described in more detail in the specification.

Figs. 1 A-B show the principle telecommunications network applicable to the present invention

Fig. 2 exemplifies an application of the present invention.

Fig. 3 shows the components in the telecommunications network relevant to the present invention.

Figs. 4.A-D illustrate run-time diagrams of the exemplary processes of the present invention.

Fig. 5 is a block diagram of the present invention applicable to a Java server.

### DETAILED DESCRIPTION

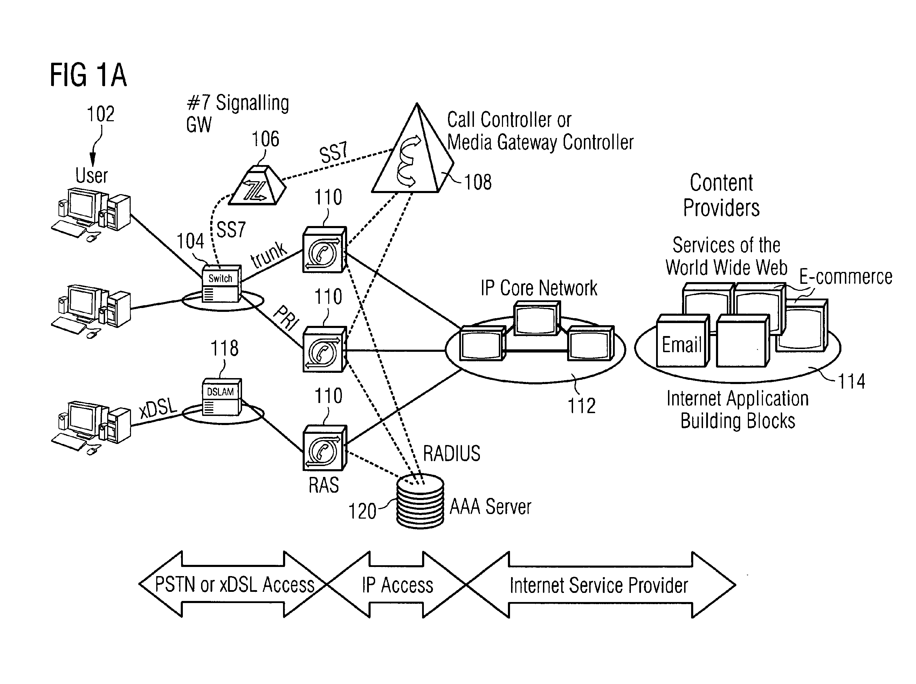

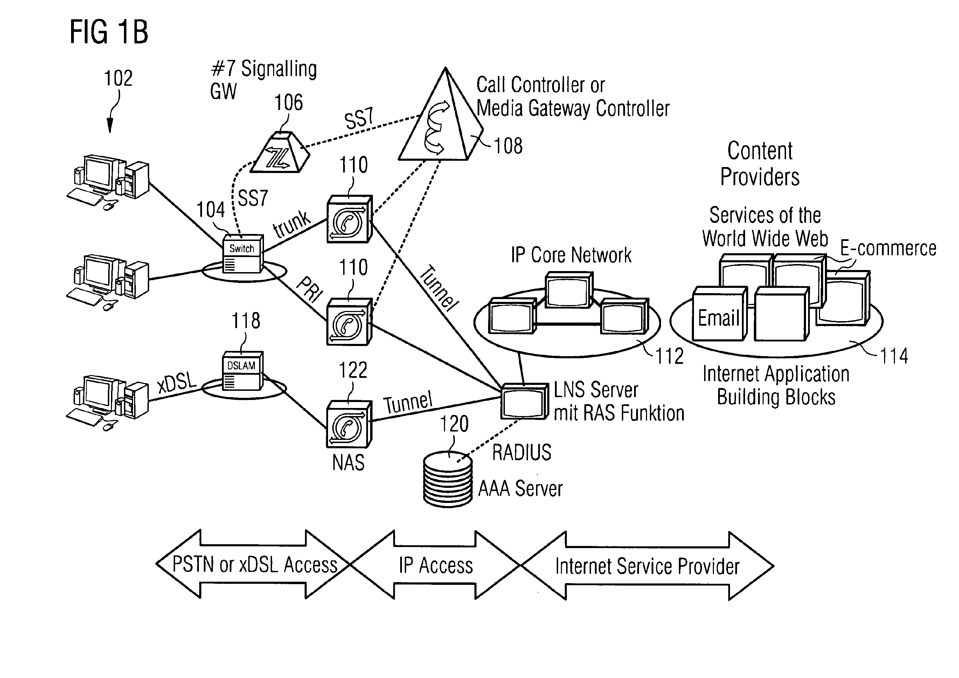

The present invention shall be described first from the perspective of the telecommunications network as illustrated in Figs. 1 A-B, wherein 1A illustrates a telecommunications network terminating in a remote access server (RAS) and Fig.1B illustrates the telecommunications network terminating in an access router. Therewith, the internet user can access media of the content providers. As shown in these figures, the internet service provider (ISP) and the public switched telephone network (PSTN)in regards to the access network can be arranged according to principle types of internet user traffic. As already mentioned, Fig. 1A shows the situation where the telecommunications network terminates in the RAS and from there accesses the IP network directly.

Now with respect Fig. 1A, in the telecommunications network 100 the users 102 connect through a switch 104, which supports, for example, signaling system 7 (SS7) communication an appropriate interface 106, to the call controller or media gateway controller 108. The switch may also switch the communication streams via a trunk through an access router 110 or a primary rate interface (ISDN) through a similar router 110 which is further connected to the IP core network 112.

The IP core network 112 supports the media and services provider by the content providers 114 on the internet, such as the worldwide web. The users 102 may also, for example, access the IP core network 112 through a remote access server 116 trough a digital subscriber line access multiplex or, and of the shared network device that receives multiple customer digital subscriber line connections rather than on a highspeed back bore line using known multiplex techniques. The authentication, authorization and accounting for the internet access services may be provided by an authentication, authorization and accounting server (AAA).

Fig. 1B shows the situation where the telecommunications network 100 terminates in a layer 2 network server (LNS)124, wherein similar components are referenced by the same reference numerals as in the previous figure. In this case, a network access service (NAS)122, tunnels into a layer 2 network server (LNS) 124, which may have a remote access server function, that couples to the IP core network 112.

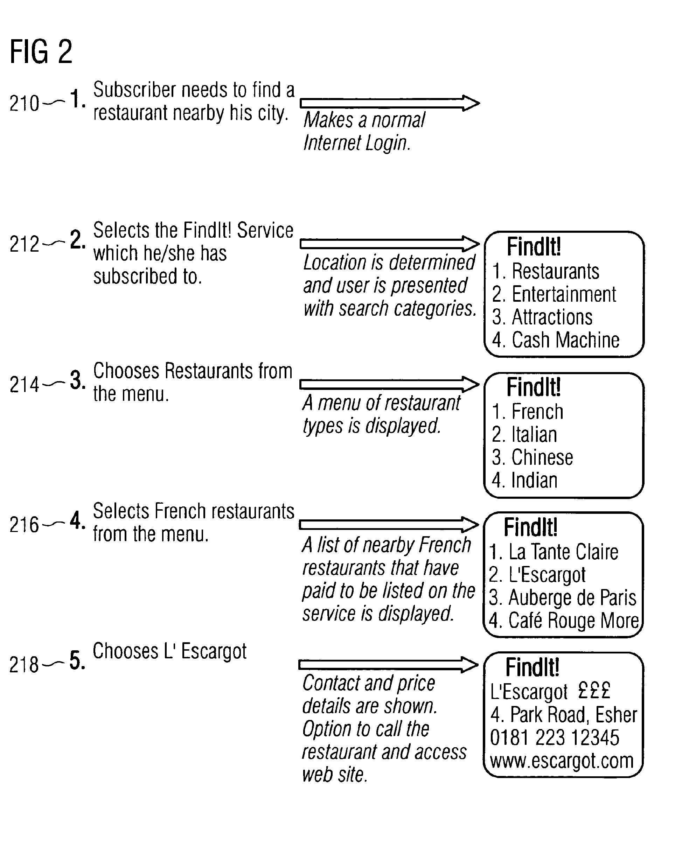

Before turning to the details of the present invention, it shall be appreciated from Figure 2 that the present invention allows for the easier application of any web application using the geographical information of the internet user who is logged on to the fixed network. In the exemplary application of the present invention shown in the figure, the user desires to research a restaurant using a search engine.

The example is illustrated in a form of a process, wherein in step 210 the user desires to find a restaurant in the area, such as in New Bay City, and thus begins the process by normally logging on to the internet. In step 212 the user selects an arbitrary search engine, here "named find it!", which the user may have subscribed to, and the present invention determines with a high granularity the location of the user. In response, for example, the application may provide such categories, such as restaurants, entertainments, attractions or locations of banks, etc, as shown. In step 214 the user may choose the restaurant from the menu of categories and, in response, the search engine may display types of restaurants, such as French, Italian, Chinese and India. In step 216, the user selects French restaurants and, for example, the search engine provides a furthered detailed list of nearby French restaurants. In the present invention, these restaurants may have paid to be listed on the service. In step 218, the user selects a particular restaurant and the contact information in prices are shown, for example. In the present invention, it shall be appreciated from Figure 2 that the geographical information of the web server plays an a important role for not only the search engine but also how it is applied, noting that in the particular example the restaurants are offered higher accuracy of advertising hits.

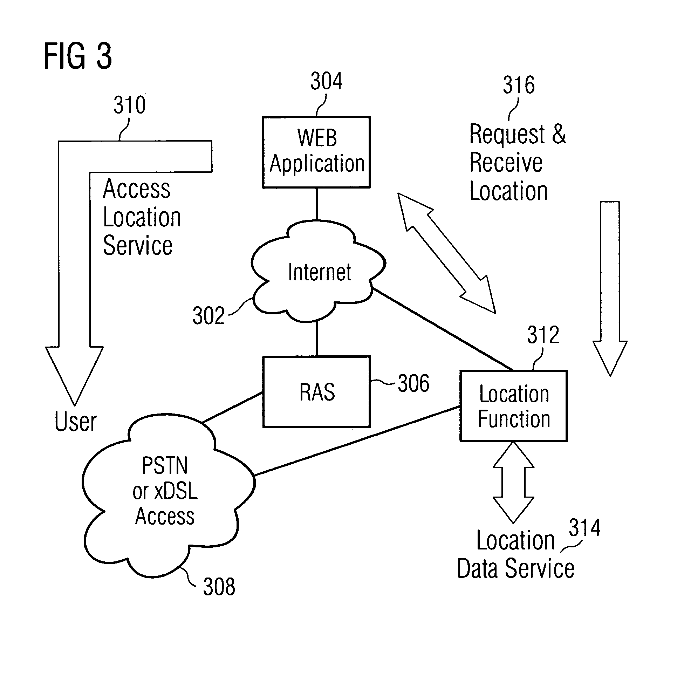

Turning now to the more technical components of the present invention Fig. 3 illustrates the components of the telecommunications network that are relevant to the localization function. It should be clear from the examples above that the internet 302 provides through the web application 304 the relevant media and services to the user trough the remote access server 306 and the corresponding PSTN or xDSL access 308 based on the geographical information. An access location service, indicated by reference number 310, is the virtual application that the web server through its web application offers the user the web contents based on the geographical information obtained with the present invention. The location function 312 provides the web application of any arbitrary web server, even those of unusual web-based protocols, the ability to ascertain the geographical information of the user logged in to the network.

In one aspect of the invention, the location data service 314 is not accessible by the user of the web application and is an internal sub function of the location function 311. The correlation between the web access, typically a hyper-text transfer protocol (HTTP)request, of a user that initiates a web application, with the geographical information obtained using the source IP address allocated when the user dials into the internet or when a AAA Server over a radius protocol is known. The following processes have as a prerequisite that the source IP address on the way to the web application is not corrupted, for example by firewalls or an AT Router that handles the internet dial in traffic.

Rather, the present invention proposes that location function, explained in the following as the location platforms, will be realized as a sub-function of the AAA server. Alternatively, the location function is realized by the sub-function of the layer 2 access server. Still alternatively, the location function is realized by an external support server of one or more AAA servers. The realization of the location data services will be now explained for both narrow band RAS and broad band RAS systems.

In the solution for the narrow band RAS, the geographical information is transferred from the part of the remote access server known as the radius protocol on the AAA server or analysed from the E.164 calling number of the internet user, known as the ANI feature which is supported by nearly all of the RAS Servers. It is proposed that the area code of the dialing call in number is extracted out of the E. 164 call number and, from this, a national, commercially available, electronically content number from the calling number.

In one aspect of the invention, the international calling number is evaluated. Therewith, can different national electronic registers be selected for not only regional, but worldwide localization of geographical information. Such a calling number register may be realized by installing the register on the location platform. With the help of a certain engine from an external calling number register, the register can be provided on nearly every PSTN. It occurs without saying that the register must be updated on the location platform, which can be done automatically by the PSTN carrier. The method here discussed is particularly applicable when all users decide to install the ISP as their service.

Another method to obtain the geographical information in case of a narrow band RAS, is to build the geographical information as part of the user data as an additional parameter to be administered which is preferable when roaming-teleworking of the users is prevented or prohibited. Within the framework of the authentication and authorization function of the AAA server, the user databank can be maintained and accessed. It shall be appreciated that there is no access to the calling number register and no application of the ANI future. It is the ISP that must maintain and process the user lists in the user databank. This can, in the given case, through application of many ISP's, make typical user self administration over web interfaces applications simple. In this way, the user can himself control the information, if he is the client of the access location service.

The solution for broad band RAS is guaranteed through access technology, that is arranged geographically not far from a xDSL connection, in range of the xDSL lines. According to a first method, tracking the roaming of the users is not possible, suffice to say that it is not possible to know the entire RAS geographical location. However, when the AAA server is the remote access server, it is possible to determine the radius when a dialing event takes place over the radius interface. This invention provides an administrable table within the AAA server or the location function selects the remote access server that knows of the geographical location.

In a second method for narrow band RAS, new parameters may be introduced in the user databank. It shall be appreciated that the granularity of the first method for broad brand RAS is fixed by the range of the xDSL lines, the Dslam and broad band RAS topology. Whereas, method 2 is dependent on the exactness of the of the user data employed. It regards to the controllability of the services, the above hyphen mentioned localization function is essential.

This discussion shows the advantages of this approaches in comparison to the dialing to the NAS in, for example Munich, of the traffic tunneled from there to a central area server, for example Frankfurt. Dynamic IP addresses must be given so that the communications streams are received in Frankfurt, but it is important to know that the tunneling method in Munich must be performed. It also be noted in method 2 that the geographical information of the users as a row is arranged in the AAA database. There most users provide future data such as address and connection information, in addition to the password registration.

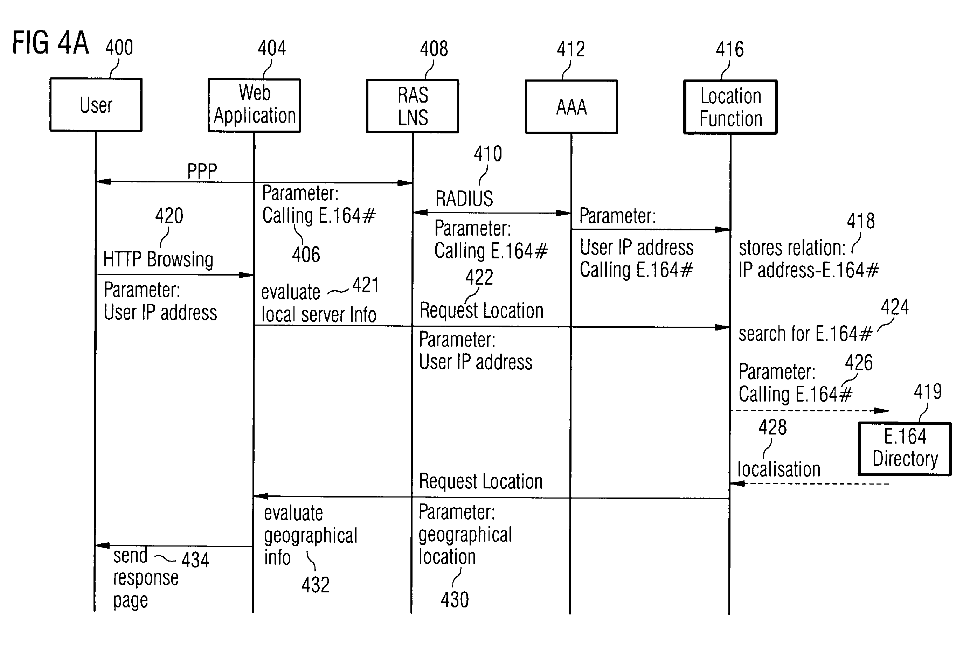

Now that the components of the invention have been described, the operation from the point of view of the web application and the AAA server, as well as the preparations of the access location service, will be given as follows. The user and the RAS Server here are not affected respectively in other included applications. Now turning to Figs. 4A-D, the operation of the narrow band remote access server will be described. The access of a calling number register is shown in dash lines.

In operation, the user 400 establishes a point to point protocol 402 in order to access web application 404 by sending a parameter calling an E.164 number 406 to the remote access server or layer 2 network server for 408. The remote access server-layer 2 network server 408, in response, using the radius protocol for which the parameter for calling the E.164 number (as indicated by the reference number 410) to the AAA a server 412. The AAA a server matches the calling E.164 number to the user IP address of the user 400 as indicated by reference number 414 and the graphical information and is sent to the location function 416 which stores a relation between the IP address and the E.164 number as indicated by reference number 418 and an E.164 directory 419.

When the user 400 initiates ATT browsing as indicated by reference number 420, the user IP address is forwarded to the web application 404, which in turn, evaluates the local server information as indicated by reference number 421. The resident remote access server or layer 2 network server for 408 requests a location of the user based on the user IP address given as indicated by reference number 422. In response, the location function 416 performs a search for E.164 as indicated by reference number 424 by sending a coparameter for the E.164 number as indicated by reference number 426 to the E.164 directory 419. The E.164 directory 419 matches the E.164 number to the user IP address stored in previous operations and the geographical information of the user is localized as indicated by the reference number 428. The location function 416 takes the localization information and forwards it to the remote access server-layer 2 network server 408, which identifies the geographical location based on the localization information from the E.164 directory 419. The web application 404 takes the geographical information as indicated by reference numeral 432.

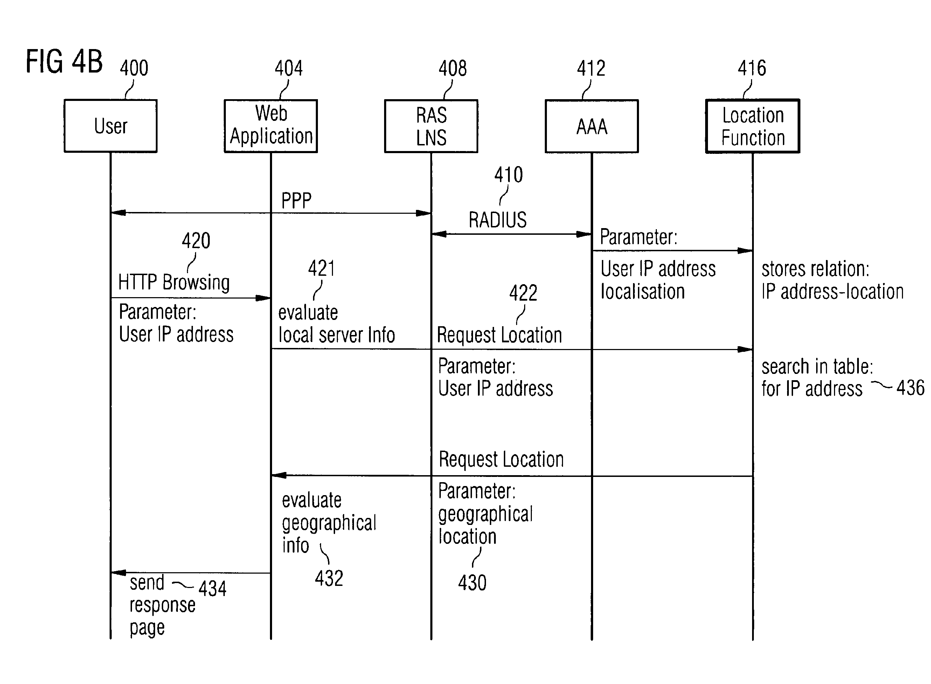

Now turning to Fig. 4B, the operation of the narrow band remote access server will now be described for the second method. The process is similar to that shown in Fig. 4A. In this case, the location function 416 stores the relation between the IP address and the location in a table. As indicated by the reference number 436, the location function searches the table as indicated by reference number 436 for the IP address.

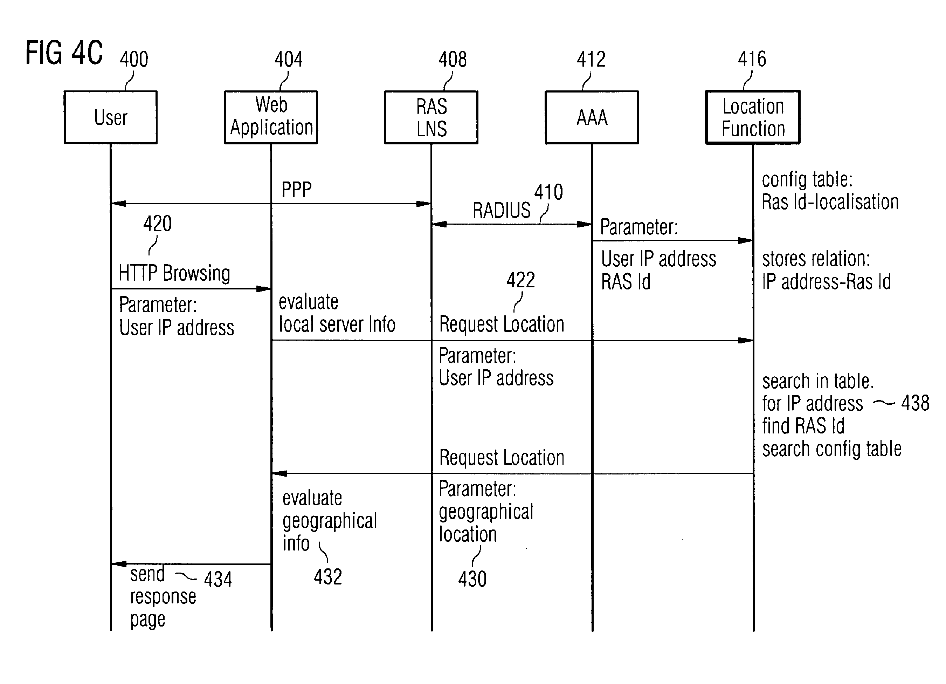

Fig. 4C shows the solution for a broad band remote access server of method 1 whereby the RAS operates to provide the geographical information from the location function. The location function 416 stores the relation and IP address configuration table that corelates the IP address to the RAS ID as indicated by reference number 438. The location function 416 searches the configuration table indicated by reference number 440 and finds the appropriate RAS ID for the given IP address.

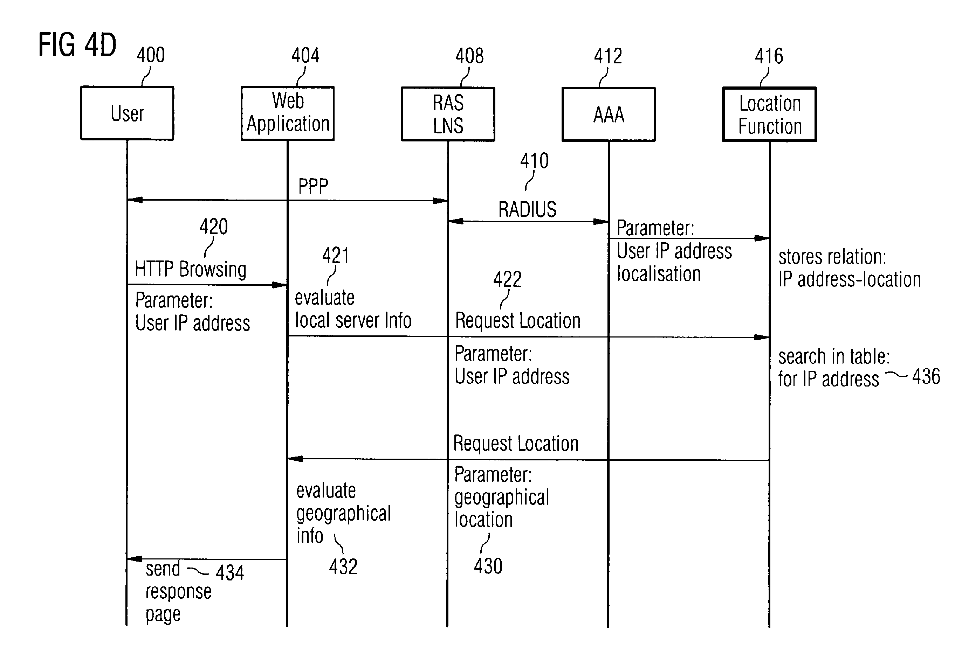

Fig. 4D illustrates the solution for a broad band RAS. It shall be appreciated that the process is the same as for the narrow band method 2 described above.

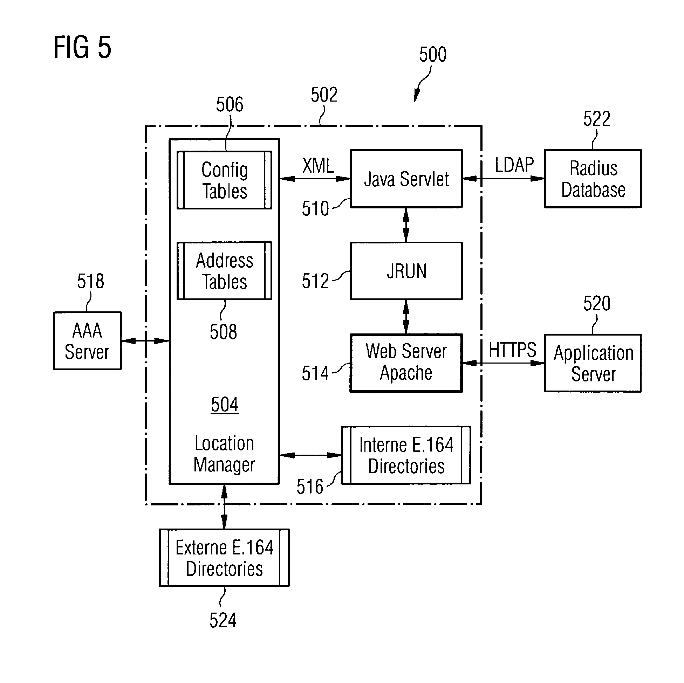

Now that the operation of the present invention has been discussed, we now turn to Fig. 5 to discuss a particular embodiment of the present invention in terms of a Java server. The exemplary figure shows the system 500 realized for an application server based on Java. In this sense, the present invention may be viewed as a special type of web server. The location platform 502 is illustrated in the figure as been contained by the dashed line and includes the location manager 504 which maintains the configuration tables and the dress tables 506, 508 respectively.

The location manager talks to a Java servelet 510 using the extended mark up language (XML), which is connected to a Jrun 512 and attached web server 514, which provides web server capability to location platform. Also is an internal E.164 directory 516 which stores the relations between the user IP address and the E.164 number, as early explained. As shown, the location platform 502 sits between the triply server 518 and the application server 520, which the location platform communicates with using HTTPS. A Radius database is also provided 522 to provide the standard information according to the Radius protocol. An external E.164 directory is also provided 524 which provides the E.164 number previously discussed with relation to Figs. 4A-D.

In operation, the location platform 502 splits functions between the AAA server and the location function. The AAA server and location function hardware are mostly integrated. Of course other AAA servers or internet protocols may be applied. The location function 502 accesses the user databank of the AAA server 518, which often maintains LDAP protocols and databanks. The location platform stores the relation between user IP address determined from the AAA server 518, and the E.164 number from the external E.164 directory 524, for example, the configuration table. This information is then sent through the Java servlet 510 and the Jrun 512 to the Apache web server 514, where it is forwarded to the application server 520. As already discussed, the application server 520 through its web application employs the geographical information to provide the user with better services. It will appreciated that in the figure the location platform is shown as an external hardware platform.

For completion of the description, the interfaces suggested for use for the present invention are now discussed. A remote access server user, the standard point-to-point protocol interfaces for narrow band and broad band RAS are sufficient. For RAS or LNS of a AAA server, the standard Radius protocol, with each method the ANI number of the AAA server must be transferred. In all cases the IP address of the user of the AAA server must be made known. The interface for a web server for the location function should, out of security reasons, be realized using HTTPS. However, this invention allows openly also other secure programming interfaces and protocols, such as XML, Cobra, etc. It shall be noted that in case the ISP has many peer agreements with content providers, the interface (out of scalability reasons) should be a hardware platform. The interface for the location function for internal or external call number registers is explained within the frame work of this description and shall not be further specified here. The interface for the location function for the E.164 call number register is also specified by this description and is not further discussed here. The interface for user to convert provider is typically realized for the HTTP protocol and is not of concern here.

## Claims

1. An apparatus for accurately determining a geographical location of a user of a telecommunications network, wherein the apparatus is an improvement over determining the geographical location of the user based on location data ascertained from a web application associated with the user, the apparatus comprising:
a switch for controlling communications of the IP network;
a remote access gateway coupling the IP network to the TDM network; and
a location function that provides a correlation between the geographical location of the user.

2. The apparatus of claim 1, wherein the user is connected to a remote access server (RAS).

3. The apparatus of claim 2, wherein the RAS is a narrowband RAS, and the location function stores a relation of IP address to an E.164 number

4. The apparatus of claim 2, wherein the RAS is a narrowband RAS, and the location function stores a relation of an IP address to the geographical location.

5. The apparatus of claim 2, wherein the RAS is a broadband RAS, and the location function stores a relation of IP address to an RAS ID.

6. The apparatus of claim 2, wherein the RAS is a broadband RAS, and the location function stores relation of IP address to E.164 number.

7. The apparatus of claim 1, where in the user is connected to an access router.

8. The apparatus of claim 1, further comprising a web application that applies the geographical information.

9. The apparatus of claim 8, wherein the web application is a search engine.

10. An improved method for accurately determining a geographical location of a user of a telecommunications network, the improvement over determining the geographical location of the user based on location data ascertained from a web application associated with the user, the apparatus comprising the steps of:
controlling communications of the IP network;
coupling the IP network to the TDM network; and
providing a correlation between the geographical location of the user.

11. The method of claim 10, wherein, in the case of a narrowband remote access server, the step of providing correlates an IP address to an E.164 number.

12. The method of claim 10, wherein, in the case of a narrowband remote access server, the step of providing correlates an IP address of the user to the geographical location.

13. The method of claim 10, wherein, in the case of a broadband remote access server, the step of providing correlates a relation of IP address to an RAS ID.

14. The method of claim 10, wherein, in the case of a broadband remote access server, the step of providing correlates an IP address of the user to an E.164 number.

15. The method of claim 10, further comprising the step of applying the geographical location to a search on a search engine based on the geographical location information.

16. The method of claim 10, further comprising the step of advertising based on the geographical location.
